(19) **Europäisches Patentamt / European Patent Office / Office européen des brevets**

(11) **EP 3 370 169 A1**

(12) # EUROPEAN PATENT APPLICATION
published in accordance with Art. 153(4) EPC

(43) Date of publication:
**05.09.2018  Bulletin 2018/36**

(21) Application number: **17755763.4**

(22) Date of filing: **15.02.2017**

(51) Int Cl.:
***G06F 17/30*** (2006.01)

(86) International application number:
**PCT/CN2017/073615**

(87) International publication number:
**WO 2017/143934 (31.08.2017 Gazette 2017/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **24.02.2016  CN 201610100358**

(71) Applicant: **Ping An Technology (Shenzhen) Co., Ltd.**
**Shenzhen, Guangdong 518000 (CN)**

(72) Inventor: **SHEN, Xiong**
**Shenzhen**
**Guangdong 518000 (CN)**

(74) Representative: **Jostarndt Patentanwalts-AG**
**Philipsstrasse 8**
**52068 Aachen (DE)**

(54) **METHOD AND APPARATUS FOR IDENTIFYING NETWORK ACCESS BEHAVIOR, SERVER, AND STORAGE MEDIUM**

(57)    A method of identifying a network access behavior includes: obtaining network access information of a user within a preset time period; extracting a behavior data of the user in each preset behavior class according to the network access information; calculating a behavior entropy of the user according to the behavior data of the user in each preset behavior class, wherein the behavior entropy characterizes a discrete degree of the network access behavior of the user; and determining an access class to which the network access behavior of the user belongs according to the behavior entropy.

```
                                                    ┌─ S302
┌─────────────────────────────────────────────────┐
│  obtaining network access information of a user  │
│           within a preset time period            │
└─────────────────────────────────────────────────┘
                         │
                         ▼                  ┌─ S304
┌─────────────────────────────────────────────────┐
│ extracting a behavior data of the user in each   │
│ preset behavior class according to the network   │
│              access information                  │
└─────────────────────────────────────────────────┘
                         │
                         ▼                  ┌─ S306
┌─────────────────────────────────────────────────┐
│ calculating a behavior entropy of the user       │
│ according to the behavior data of the user in    │
│         each preset behavior class               │
└─────────────────────────────────────────────────┘
                         │
                         ▼                  ┌─ S308
┌─────────────────────────────────────────────────┐
│ determining an access class to which the network │
│ access behavior of the user belongs according to │
│              the behavior entropy                │
└─────────────────────────────────────────────────┘
```

Fig. 3

EP 3 370 169 A1

**Description**

**CROSS REFERENCE TO RELATED APPLICATIONS**

The present application claims the benefit of Chinese patent Application No. 2016101003580, entitled "METHOD AND DEVICE OF IDENTIFYING NETWORK ACCESS BEHAVIOR" filed on February 24, 2016, the entire content of which is incorporated herein in its entirety.

**FIELD OF THE INVENTION**

The present application relates to the technical field of computer network, and particularly to a method and a device of identifying a network access behavior, a server, and a storage medium.

**BACKGROUND OF THE INVENTION**

With the development of computer technology and improvement of recognizing importance of information, some unscrupulous people steal data on websites or platforms by using the developed web crawler technologies. Particularly, in the field of electronic commerce, information such as price of goods, reviews of the buyers and the like can be quickly obtained by these web crawler technologies, resulting significant losses for the enterprises data of which are stolen.

In conventional methods, a network access behavior of the user is identified as a malicious behavior of stealing data or a normal browsing behavior by manual examination. Because people may be tired, accuracy of such conventional manual identification methods is relatively low.

**SUMMARY OF THE INVENTION**

According to various embodiments disclosed by the application, a method and a device of identifying a network access behavior, a server and a storage medium are provided.

A method of identifying a network access behavior includes:

obtaining network access information of a user within a preset time period;
extracting a behavior data of the user in each preset behavior class according to the network access information;
calculating a behavior entropy of the user according to the behavior data of the user in each preset behavior class, wherein the behavior entropy characterizes a discrete degree of the network access behavior of the user; and
determining an access class to which the network access behavior of the user belongs according to the behavior entropy.

A device of identifying a network access behavior, including:

a network access information obtainment module configured to obtain network access information of a user within a preset time period;
a behavior data obtainment module configured to extract a behavior data of the user in each preset behavior class according to the network access information;
a behavior entropy calculation module configured to calculate a behavior entropy of the user according to the behavior data of the user in each preset behavior class, wherein the behavior entropy characterizes a discrete degree of the network access behavior of the user; and
an access class determination module configured to determine an access class to which the network access behavior of the user belongs according to the behavior entropy.

A server, including a memory and a processor, the memory storing instructions that, when executed by the processor, cause the processor to perform the steps of:

obtaining network access information of a user within a preset time period;
extracting a behavior data of the user in each preset behavior class according to the network access information;
calculating a behavior entropy of the user according to the behavior data of the user in each preset behavior class, wherein the behavior entropy characterizes a discrete degree of the network access behavior of the user; and
determining an access class to which the network access behavior of the user belongs according to the behavior entropy.

One or more non-transitory computer readable storage medium storing computer executable instructions that, when executed by the one or more processors, cause the one or more processors to perform the steps of:

obtaining network access information of a user within a preset time period;
extracting a behavior data of the user in each preset behavior class according to the network access information;
calculating a behavior entropy of the user according to the behavior data of the user in each preset behavior class, wherein the behavior entropy characterizes a discrete degree of the network access behavior of the user; and
determining an access class to which the network access behavior of the user belongs according to the behavior entropy.

The details of one or more embodiments of the invention are set forth in the accompanying drawings and the description below. Other features, objects, and advantages of the invention will be apparent from the description and drawings, and from the claims.

**BRIEF DESCRIPTION OF THE DRAWINGS**

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.

Fig. 1 is an application environment diagram of a method of identifying a network access behavior in an embodiment;
Fig. 2 is a block diagram of a server in an embodiment;
Fig. 3 is a flow chart of a method of identifying a network access behavior in an embodiment;
Fig. 4 is a step flow chart of a step of calculating a behavior entropy of the user according to the behavior data of the user in each preset behavior class in an embodiment;
Fig. 5 is a block diagram of a device of identifying a network access behavior in an embodiment; and
Fig. 6 is a schematic diagram of a behavior data obtainment module in an embodiment.

**DETAILED DESCRIPTION OF THE EMBODIMENTS**

The above objects, features and advantages of the present invention will become more apparent by describing in detail embodiments thereof with reference to the accompanying drawings. It should be understood that these embodiments depicted herein are only used to illustrate the present invention and are not therefore to limit the present invention.

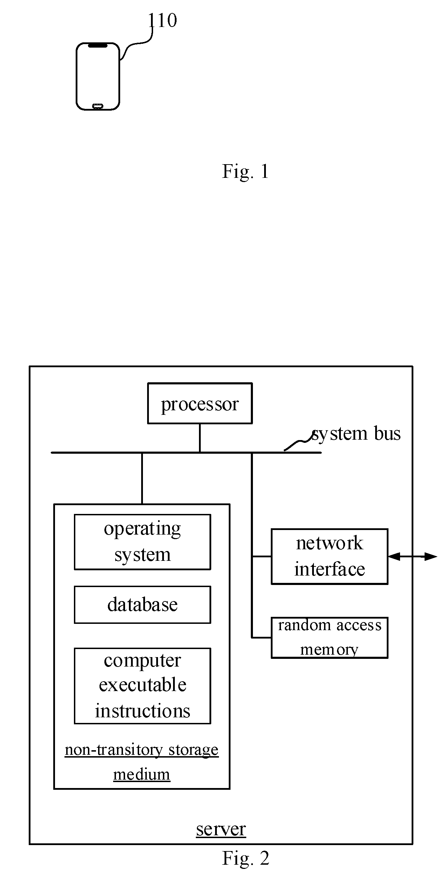

Fig. 1 is an application environment diagram of a method of identifying a network access behavior in an embodiment. Referring to Fig. 1, a terminal 110 communicates with a server 120 via a network. The terminal 110 transmits a network access request to the server 120, and the server 120 obtains the corresponding network access information of the user within a preset time period according to the network access request. Alternatively, the server 120 may periodically and actively obtain the network access information of the user from a database within the preset time period. The server 120 extracts the behavior data of the user in each preset behavior class according to the network access information, then calculates the behavior entropy of the user according to the behavior data of the user in each preset behavior class, wherein the behavior entropy characterizes a discrete degree of the network access behavior of the user; and 120 determines an access class to which the network access behavior of the user belongs according to the behavior entropy.

It should be understood that the terminal 110 includes, but is not limited to, various personal computers, smart phones, tablet computers, laptops, portable wearable apparatuses and the like, which will not be enumerated one by one herein.

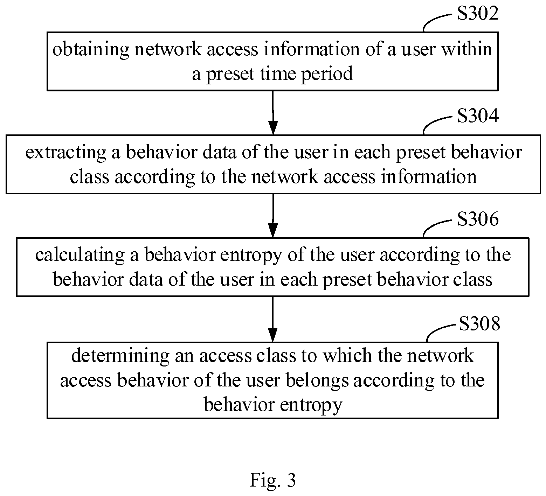

Fig. 2 is a block diagram of the server in an embodiment. The server includes a processor, a non-transitory storage medium, a RAM (Random Access Memory) and a network interface connected via a system bus. The processor is configured to provide calculation and control capabilities to support operation of the entire server. The non-transitory storage medium of the server stores an operating system, a database and computer executable instructions. The database is configured to store the relevant data involved in processes of the method of identifying a network access behavior, for example, to store the historical access data of each user for the relevant web pages. The computer executable instructions may be executed by the processor to implement the method of identifying a network access behavior applied to the server, as shown in Fig. 3. The RAM in the server provides a running environment of the cache to the operating system, the database, and the computer executable instructions in the non-transitory storage medium. The network interface is configured to perform a network communication with the terminal. It can be understood that the server can be a separate server or a server cluster composed by a plurality of servers.

Those skilled in the art can understand that the structure shown in Fig. 2 is only a block diagram of the partial structure associated with the present solution and does not limit the server to which the present solution is applied, and the particular server may include more or fewer parts shown in the drawing, or combine certain parts, or have a different arrangement of parts.

In an embodiment, referring to Fig. 3, a method of identifying a network access behavior is provided. The method can be applied to a scene in which it requires to determine whether the network access behavior of the user is a malicious behavior or not, particularly a scene in which it requires to determine whether the network access of the user to the electronic commerce network or the shopping network is a malicious access. Further, the network access can be a network access performed by the common browser application, and can be also a network access performed by using other applications. For example, the web pages can be browsed by using the applications such as social applications, electronic commerce applications or shopping applications. The present embodiment is illustrated by applying the method of identifying the network access behavior to the server shown in Fig. 1 or 2, the method particularly includes the following steps S302 to S308.

In step S302, network access information of a user within a preset time period is obtained.

In the illustrated embodiment, the network access information of the user is the information that the user is accessing the network or the historical access information recorded by the server. The user may access the network through one or more different terminals. The terminals may be, but are not limited to, personal computers, laptops, tablets, smart phones, wearable smart devices, and the like. The server can monitor the network access information of the user in real time and store the network access information. In one embodiment, the server may classify and record the network access information of each user according to the user name of the user. The network access information may include, but is not limited to, the basic information of the user, such as the age of the user and the contact information thereof. The network access information can further include the login time, login name, search information, browse information and purchase information of the user and the like. In one embodiment, the search information, the browse information, and the purchase information described above may be the information that the user performs the browsing operation, the searching operation, and the purchasing operation when the user accesses a website such as an electronic commerce website or a shopping website.

In the embodiment, the preset time period may be the latest one month, two months, or two weeks of the user and the like. In one embodiment, the server may set a detection period, which is the preset time period. The server periodically obtains the network access information of the user within the current period according to the detection period. Alternatively, the server may begin to obtain the network access information of the user within the preset time period after the server detects the browsing behavior of the user.

In step S304, a behavior data of the user in each preset behavior class is extracted according to the network access information.

In the embodiment, the server presets behavior classes to be detected and counted. The preset behavior classes may include, but are not limited to, one or more of the login behavior class, the purchase behavior class, the browse behavior class, the search behavior class of the user and the like. Correspondingly, the behavior data includes, but is not limited to, one or more of number of logins, number of purchases, number of browses, number of searches of the user and the like. Generally, the network access information of the user stored by the server is a comprehensive information that the user accesses the network. Therefore, after obtaining the network access information, the network access information can be analyzed to extract the behavior data of the user in each preset behavior class.

In one embodiment, the step of extracting the behavior data of the user in each preset behavior class according to the network access information includes: the network access information is preprocessed; and the behavior data of the user in each preset behavior class is obtained according to the preprocessed network access information, so that the obtained behavior data of the same class has the same format.

In the embodiment, in order to extract the behavior data of each class, the network access information can be preprocessed. Preprocessing of the network access information includes acquiring of variables of the network access information, processing for the maximum minimum rule, processing for the missing value, processing of format and the like.

Acquiring of variables is to acquire the access time, the login time, the browse information, the search information, the purchase information of the user and the like from the network access information for each network access, such as the access time, the login time, the browse information, the search information, the purchase information when a specific electronic commerce website is accessed. When the server acquires the information such as the access time, the login time, the browse information, the search information and the purchase information of the user for each access, the server can call the relevant accumulator or calculator to count number of logins, number of purchases, number of browses and number of searches the user within the preset time period.

Processing for the maximum minimum rule includes processing of numeric size included by the acquired network access information to reduce the interference of the abnormal data for determining of the behavior class of the user. In one embodiment, an age of the user in the acquired network access information may be processed according to the maximum minimum rule. For example, for age of -1,0, or 999 years old and the like, data that does not comply with the normal age of the user obviously is processed according to the maximum minimum rule.

Processing for the missing value means that when the behavior data in the preset behavior class included in the acquired network access information does not exist, processing for the missing value can be performed for such behavior data. For example, such behavior data is marked as "0", or is replaced by other information. For example, when the user accesses the relevant shopping website anonymously or directly without logining the user name, the login information of the user recorded by the server is missing. The server may perform processing for the missing value for such information, for example, to obtain a unique identifier of the access terminal of the user, and associate the unique identifier with the login name of the user.

Processing of format includes processing of format of the time information included in the network access information, so that the format is kept the same. For example, the time information such as the recorded login time of the user, such as the recorded time information including 20091011, 2009-10-11 and October 11, 2009, which can be converted into a unified format, such as 20091011.

In step S306, a behavior entropy of the user is calculated according to the behavior data of the user in each preset behavior class.

In the embodiment, the entropy is description of the disorder status of the physical system and is a measure of the disorder degree. The behavior entropy reflects uncertainty and disorder of the behavior of the person, and characterizes a discrete degree of the network access behavior of the user. In general, the more regular of the behavior of the user tends to be, the less behavior entropy of the user, and the behavior is more likely to be performed by a machine. After the server calculates the behavior data of each preset behavior class, the server can calculate the behavior entropy of the user according to the behavior data in each preset behavior class. In one embodiment, the probability of occurrence of each behavior data in all preset behavior classes can be calculated respectively, so as to obtain a first class probability. The probability of each class is logarithmically calculated to obtain the second class probability. The first class probability and the second class probability are calculated in accordance with the preset manner such as four arithmetic operations, and the calculation result is used as the behavior entropy.

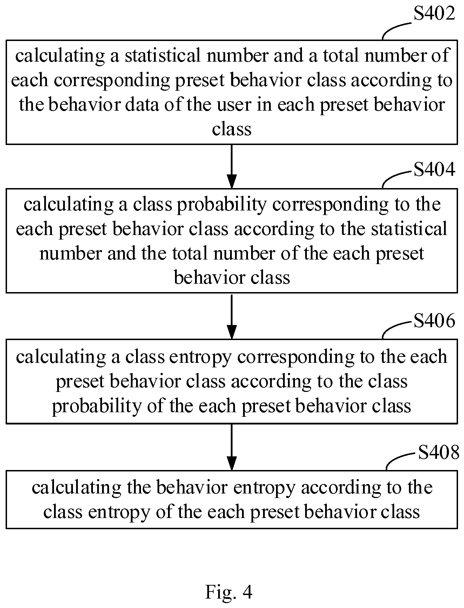

In an embodiment, referring to Fig. 4, the step of calculating the behavior entropy of the user according to the behavior data of the user in each preset behavior class includes:

In step S402, a statistical number and a total number of each corresponding preset behavior class are calculated according to the behavior data of the user in each preset behavior class.

In the embodiment, the statistical number includes, but is not limited to, one or more of a number of logins, a number of purchases, a number of browses, and a number of searches. The total number is the sum of the statistical number of each preset behavior class.

Taking the preset behavior class includes four behavior classes as an example: the login behavior, the purchase behavior, the browse behavior and the search behavior, the statistical numbers of the corresponding behavior classes are the number of logins, the number of purchases, the number of browses and the number of searches respectively. The total number is the sum of the number of logins, the number of purchases, the number of browses and the number of searches. For example, referring to Table 1, the server calculates the numbers of logins, the numbers of searches, the numbers of browses and the numbers of purchases and the total numbers of the above four classes of user A and user B within the preset time period.

In step S404, a class probability corresponding to the each preset behavior class is calculated according to the statistical number and the total number of the each preset behavior class.

Continuously referring to Table 1, four corresponding class probabilities, i.e. the login probability, the search probability, the browse probability and the purchase probability, can be calculated according to the statistical numbers and the total number of four behavior classes described above respectively.

Table 1

|  | user A | user B |
|---|---|---|
| the number of logins | 4 | 3 |
| the number of searches | 9 | 212 |
| the number of browses | 21 | 1997 |
| the number of purchases | 3 | 0 |
| the total number | 37 | 2212 |
| the login probability | 0.108108 | 0.001356 |

(continued)

|  | user A | user B |
|---|---|---|
| the search probability | 0.243243 | 0.095841 |
| the browse probability | 0.567568 | 0.902803 |
| the purchase probability | 0.081081 | 0 |
| the login entropy | 0.346968 | 0.01292 |
| the search entropy | 0.496101 | 0.32425 |
| the browse entropy | 0.46378 | 0.133179 |
| the purchase entropy | 0.293878 | 0 |
| the behavior entropy | 1.600727 | 0.470349 |

In step S406, a class entropy corresponding to the each preset behavior class is calculated according to the class probability of the each preset behavior class.

In the embodiment, the class entropy characterizes a discrete degree of the network access behavior of the user in a corresponding class. In one embodiment, the class entropy refers to the login entropy, the search entropy, the browse entropy and the purchase entropy corresponding to the login behavior, the purchase behavior, the purchase behavior and the search behavior.

In one embodiment, the class entropy is represented by the following formula:

$$P_i = a \sum_{i=1}^{C} p_i \log_b(p_i)$$

wherein $P_i$ represents a class entropy of class i behavior, $a$ is any coefficient that is not 0, $b$ is a coefficient greater than 0, $C$ represents a class number of a preset behavior class, $p_i$ represents a probability of the class behavior of class $i$ relative to the total number. When $p_i$ is 0, the corresponding $P_i$ is marked as 0.

For example, the login behavior, the purchase behavior, the browse behavior and the search behavior are marked as the corresponding first to fourth behavior respectively, then $C$=4, correspondingly, $p_1$ to $p_4$ represent the login probability, the purchase probability, the browse probability and the search probability respectively; $P_1$ to $P_4$ represent the login entropy, the purchase entropy, the browse entropy and the search entropy.

In a preferred embodiment, the coefficient $a$ may be -1; the coefficient $b$ may be 2. That is to say, the calculation formula of the class entropy may be:

$$P_i = -\sum_{i=1}^{C} p_i \log_2(p_i)$$

The class entropies of user A and user B in Table 1 are calculated by using the above formula of a=-1 and b=2, then values of the login entropies, the search entropies, the browse entropies and the purchase entropies of user A and user B can be calculated as 0.346968, 0.496101, 0.46378 and 0.293878 and 0.01292, 0.32425, 0.133179 and 0.

In step S408, the behavior entropy is calculated according to the class entropy of the each preset behavior class.

In the embodiment, the server may assign different weight values to each class entropy in advance. Further, a relatively larger or smaller weight value can be assigned to the class entropy of the behavior class having a larger influence. After calculating value of each class entropy, the value is multiplied by the corresponding weight value, and products of all class entropies and corresponding weight values are added up, then the weighted product sum is the behavior entropy.

In an embodiment, when all weight values are 1, then the behavior entropy is the sum of each class entropy, i.e. the sum of the class entropy of each preset behavior class. Referring to Table 1, the behavior entropies of user A and user B can be calculated according to the above manner respectively: 1.600727 and 0.470349.

In step S308, an access class to which the network access behavior of the user belongs is determined according to the behavior entropy.

In the embodiment, the server may preset different access classes. For example, three classes can be set, and the corresponding behaviors are the machine access behavior, the suspicious access behavior and the normal access behavior; the corresponding users are set as the machine user, the suspicious user and the normal users.

The server may correspondingly set the range of the behavior entropy of the user corresponding to each class according to the calculation formula of the determined behavior entropy. After calculating the behavior entropy, the range to which the behavior entropy belongs is found, and then the class of the user is determined.

Similarly, taking the calculation manner of the behavior entropy corresponding to Table 1 as an example, the server sets the ranges of the behavior entropies corresponding to the machine access behavior, the suspicious access behavior and the normal access behavior.

For example, the ranges of the behavior entropy corresponding to the machine access behavior, the suspicious access behavior and the normal access behavior are set as $0 \leq x < 0.5$, $0.5 \leq x < 1$ and $x \geq 1$ respectively, where x represents the value of the behavior entropy of the user. Referring to Table 1, when the behavior entropy of user A is 1.600727, its range can be determined as $x \geq 1$, and then it can be determined as an normal user; the behavior entropy of user B is 0.470349, and its range is $0 \leq x < 0.5$, then it can be determined as a machine user.

According to the method of identifying the network access behavior provided by the embodiment, the behavior data of the user in each preset behavior class is extracted according to the network access information of the user within the preset time period, the behavior entropy of the user is then calculated according to the behavior data. The access class to which the network access behavior of the user belongs can be further determined according to the behavior entropy. The above method can quickly and accurately identify whether the behavior of the user is a behavior of malicious data stealing or a behavior of normal data browsing, and then the corresponding actions can be made according to the determined result for the behavior.

In one embodiment, after the step of determining the access class to which the network access behavior of the user belongs according to the behavior entropy, the method includes: when the access class of the user is determined as the machine access behavior, the account of the user is frozen; when the access class of the user is a suspicious access behavior, the contact manner of the user is obtained, and a suspicious warning is transmitted to the contact manner.

In the embodiment, when the user is determined as a machine user, it can be illustrated that the behavior of the user is a behavior that maliciously steals data, such as steals the merchandise information on the electronic commerce website, so that use of the account can be frozen. When the user is determined as a suspicious user, it is illustrated that the behavior of the user is a behavior that steals data to some extent, the server can obtain the contact manner of the user, such as the email of the user, so that a warning email is transmitted to the user.

Further, in one embodiment, the network access information includes a login time of the user within the preset time period. The step of calculating the behavior entropy of the user according to the behavior data of the user in each preset behavior class includes: the discrete degree of the login time of the user is calculated; the first behavior entropy weight value of the user is determined according to the discrete degree; a new behavior entropy of the user is determined according to the first behavior entropy weight value and the behavior entropy.

In the embodiment, the login time indicates the time at which the user begins to login the account to browse data, and the login time does not take into account the login date. The discrete degree of the logon time can be characterized using "variance". The server can calculate the average login time of the user according to the login time obtained from the network access information within the preset time period, and then calculate the variance of the login time of the user within the preset time period. The behavior entropy of the user can be correspondingly determined according to the number of logins and the variance.

The server can set the first behavior entropy weight value corresponding to different variances or variance ranges in the ranges of different login numbers. The above calculated behavior entropy is multiplied by the determined first behavior entropy weight value, and the product is used as a new behavior entropy; and the behavior class of the user is correspondingly determined by the new behavior entropy.

For example, referring to Tables 2 to 4, Table 2 and Table 3 record the login times of user A and user B in Table 1; and Table 4 shows the corresponding relationship of the time discrete degree range and the first behavior entropy weight value preset by the server. If the server calculates the time discrete degree of user A as 1 and the time discrete degree of user B as 15, then the first behavior entropy weight values of user A and user B can be obtained according to the preset corresponding relationship respectively: 1 and 0.9; and then the new behavior entropy of user A and user B can be calculated according to the weight values: 1.600727 and 0.4233141.

Table 2

| 8:01:23 | 7:58:32 | 7:59:59 |
|---------|---------|---------|

Table 3

| 14:36:49 | 21:40:51 | 6:06:07 | 11:35:25 |
|---|---|---|---|

Table 4

| time discrete degree range | 0-10 | 10-100 | above 100 |
|---|---|---|---|
| first behavior entropy weight value | 0.7 | 0.9 | 1 |

In the embodiment, the behavior entropy of the user is determined by combining the login time of the user, and the behavior class of the user can be correspondingly determined according to the behavior entropy, which can further improve the accuracy of identifying the behavior of the user.

Further, in one embodiment, the network access information includes an age of the user. The step of calculating the behavior entropy of the user according to the behavior data of the user in each preset behavior class further includes: whether the age of the user is a sensitive age or not is determined, if yes, then a second behavior entropy weight value corresponding to the sensitive age is obtained; and a new behavior entropy of the user is determined according to the second behavior entropy weight value and the behavior entropy.

In the embodiment, the server may set a plurality of ages as the sensitive ages, and the sensitive ages are used to indicate the age automatically generated by the machine, for example the sensitive ages can be set as -1, 0, 1, and 999 years old and the like. When the age of the user is detected as a sensitive age, the second behavior entropy weight value corresponding to the sensitive age set by the server can be obtained. The initially calculated behavior entropy is multiplied by the second behavior entropy weight value, and the product serves as the new behavior entropy of the user.

In one embodiment, a new behavior entropy may also be determined by combining the age and the login time of the user. In one embodiment, when the age of the user is detected as a sensitive age, the initially calculated behavior entropy is multiplied by the first behavior entropy weight value and the second behavior entropy weight value, and the product serves as a new behavior entropy.

In the embodiment, the behavior entropy of the user is determined by combining the age of the user, and the behavior class of the user can be determined according to the behavior entropy, which can further improve the accuracy of identifying the behavior of the user.

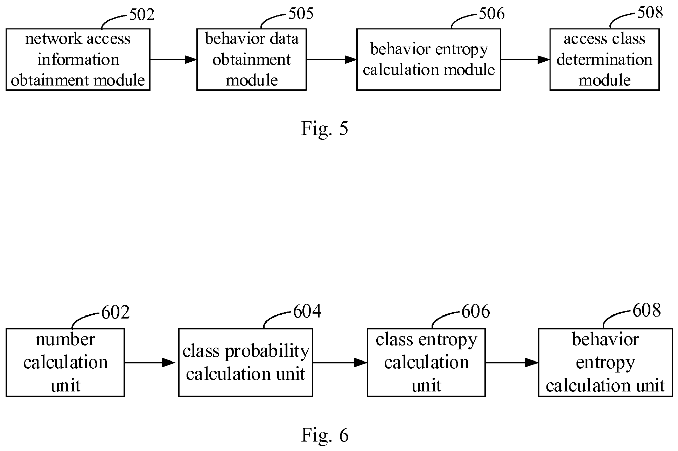

In an embodiment, referring to Fig. 5, a device of identifying a network access behavior is provided; the device can be operated in the server as shown in Fig. 1 or Fig. 2. The device includes:

a network access information obtainment module 502 configured to obtain network access information of a user within a preset time period;
a behavior data obtainment module 504 configured to extract a behavior data of the user in each preset behavior class according to the network access information;
a behavior entropy calculation module 506 configured to calculate a behavior entropy of the user according to the behavior data of the user in each preset behavior class, wherein the behavior entropy characterizes a discrete degree of the network access behavior of the user; and
an access class determination module 508 configured to determine an access class to which the network access behavior of the user belongs according to the behavior entropy.

In an embodiment, the behavior data obtainment module 504 is further configured to: preprocess the network access information; and obtain the behavior data of the user in each preset behavior class according to the preprocessed network access information, so that the obtained behavior data of the same class has the same format.

In an embodiment, referring to Fig. 6, the behavior entropy calculation module includes:

a number calculation unit 602 configured to calculate a statistical number and a total number of each corresponding preset behavior class according to the behavior data of the user in each preset behavior class, wherein the total number is a sum of the statistical number of the each preset behavior class;
a class probability calculation unit 604 configured to calculate a class probability corresponding to the each preset behavior class according to the statistical number and the total number of the each preset behavior class;
a class entropy calculation unit 606 configured to calculate a class entropy corresponding to the each preset behavior class according to the class probability of the each preset behavior class, wherein the class entropy characterizes a discrete degree of the network access behavior of the user in a corresponding class; and

a behavior entropy calculation unit 608 configured to calculate the behavior entropy according to the class entropy of the each preset behavior class.

In an embodiment, a calculation formula of the class entropy is: $P_i = a \sum_{i=1}^{C} p_i \log_b (p_i)$, wherein $P_i$ represents a class entropy of class $i$ behavior, $a$ is any coefficient that is not 0, b is a coefficient greater than 0, C represents a class number of a preset behavior class, $p_i$ represents a probability of the class behavior of class $i$ relative to the total number; the behavior entropy is a sum of the class entropy of the each preset behavior class.

In an embodiment, the network access information includes a login time of the user within the preset time period; the behavior entropy calculation module 506 is further configured to calculate a discrete degree of the login time of the user; determine a first behavior entropy weight value of the user according to the discrete degree; and determine a new behavior entropy of the user according to the first behavior entropy weight value and the behavior entropy.

In an embodiment, the network access information includes an age of the user; the behavior entropy calculation module 506 is further configured to determine whether the age of the user is a sensitive age or not, if yes, then obtain a second behavior entropy weight value corresponding to the sensitive age; and determine a new behavior entropy of the user according to the second behavior entropy weight value and the behavior entropy.

Each module in the above device of identifying the network access behavior may be implemented in whole or in part by software, hardware, and combinations thereof; wherein, the network interface can be an Ethernet card or a wireless network card and the like. Each module described above may be embedded in or independent from the processor in the server in the form of the hardware, or may be stored in the RAM in the server in the form of the software, so that the processor calls the operations performed by each module described above. The processor may be a central processing unit (CPU), a microprocessor, a single chip, or the like.

It can be understood by those skilled in the art that all or a part of the processes in the method of the embodiments described above may be accomplished by means of the associated hardwares instructed by a computer program, and the computer program may be stored in a computer readable storage medium. When the program is executed, an embodiment flow of each method described above may be included. The storage medium may be a magnetic disk, an optical disk, a read only memory (ROM), a random access memory (RAM), or the like.

Various features of the above embodiments can be combined in any manner. For simplicity of description, all possible combinations of various features in the above embodiments are not described. However, these combinations of these features should be regarded in the scope described in the specification as long as they do not contradict with each other.

Although the invention is illustrated and described herein with reference to specific embodiments, the invention is not intended to be limited to the details shown. Rather, various modifications may be made in the details within the scope and range of equivalents of the claims and without departing from the invention.

**Claims**

1. A method of identifying a network access behavior, comprising:

   obtaining network access information of a user within a preset time period;
   extracting a behavior data of the user in each preset behavior class according to the network access information;
   calculating a behavior entropy of the user according to the behavior data of the user in each preset behavior class, wherein the behavior entropy characterizes a discrete degree of the network access behavior of the user; and
   determining an access class to which the network access behavior of the user belongs according to the behavior entropy.

2. The method of claim 1, wherein the extracting the behavior data of the user in each preset behavior class according to the network access information comprises:

   preprocessing the network access information; and
   obtaining the behavior data of the user in each preset behavior class according to the preprocessed network access information, so that the obtained behavior data of the same class has the same format.

3. The method of claim 1, wherein the calculating the behavior entropy of the user according to the behavior data of the user in each preset behavior class comprises:

calculating a statistical number and a total number of each corresponding preset behavior class according to the behavior data of the user in each preset behavior class, the total number being a sum of the statistical numbers of the each preset behavior class;

calculating a class probability corresponding to each preset behavior class according to the statistical number and the total number of the each preset behavior class;

calculating a class entropy corresponding to the each preset behavior class according to the class probability of the each preset behavior class, wherein the class entropy characterizes a discrete degree of the network access behavior of the user in a corresponding class; and

calculating the behavior entropy according to the class entropy of the each preset behavior class.

4. The method of claim 3, wherein a calculation formula of the class entropy is:

$$P_i = a \sum_{i=1}^{C} p_i \log_b(p_i)$$ , wherein $P_i$ represents a class entropy of class i behavior, $a$

is any coefficient that is not 0, $b$ is a coefficient greater than 0, $C$ represents a class number of a preset behavior class, $p_i$ represents a probability of the class behavior of class $i$ relative to the total number;

the behavior entropy being a sum of the class entropy of the each preset behavior class.

5. The method of claim 1, wherein the network access information comprises a login time of the user within the preset time period;

the calculating the behavior entropy of the user according to the behavior data of the user in each preset behavior class comprises:

calculating the discrete degree of the login time of the user;

determining a first behavior entropy weight value of the user according to the discrete degree; and

determining a new behavior entropy of the user according to the first behavior entropy weight value and the behavior entropy.

6. The method of claim 1, wherein the network access information comprises an age of the user;

the calculating the behavior entropy of the user according to the behavior data of the user in each preset behavior class comprises:

determining whether the age of the user is a sensitive age or not, if yes, then obtaining a second behavior entropy weight value corresponding to the sensitive age; and

determining a new behavior entropy of the user according to the second behavior entropy weight value and the behavior entropy.

7. A device of identifying a network access behavior, comprising:

a network access information obtainment module configured to obtain network access information of a user within a preset time period;

a behavior data obtainment module configured to extract a behavior data of the user in each preset behavior class according to the network access information;

a behavior entropy calculation module configured to calculate a behavior entropy of the user according to the behavior data of the user in each preset behavior class, wherein the behavior entropy characterizes a discrete degree of the network access behavior of the user; and

an access class determination module configured to determine an access class to which the network access behavior of the user belongs according to the behavior entropy.

8. The device of claim 7, wherein the behavior data obtainment module is further configured to:

preprocess the network access information; and

obtain the behavior data of the user in each preset behavior class according to the preprocessed network access information, so that the obtained behavior data of the same class has the same format.

9. The device of claim 7, wherein the behavior entropy calculation module comprises:

a number calculation unit configured to calculate a statistical number and a total number of each corresponding preset behavior class according to the behavior data of the user in each preset behavior class, wherein the total number being a sum of the statistical number of the each preset behavior class;

a class probability calculation unit configured to calculate a class probability corresponding to the each preset behavior class according to the statistical number and the total number of the each preset behavior class;

a class entropy calculation unit configured to calculate a class entropy corresponding to the each preset behavior class according to the class probability of the each preset behavior class, wherein the class entropy characterizes a discrete degree of the network access behavior of the user in a corresponding class; and

a behavior entropy calculation unit configured to calculate the behavior entropy according to the class entropy of the each preset behavior class.

10. The device of claim 8, wherein a calculation formula of the class entropy is:

$$P_i = a \sum_{i=1}^{C} p_i \log_b (p_i)$$ , wherein $P_i$ represents a class entropy of class $i$ behavior, $a$

is any coefficient that is not 0, $b$ is a coefficient greater than 0, $C$ represents a class number of a preset behavior class, $p_i$ represents a probability of the class behavior of class $i$ relative to the total number;

the behavior entropy being a sum of the class entropy of the each preset behavior class.

11. The device of claim 7, wherein the network access information comprises a login time of the user within the preset time period;

the behavior entropy calculation module is further configured to calculate a discrete degree of the login time of the user; determine a first behavior entropy weight value of the user according to the discrete degree; and determine a new behavior entropy of the user according to the first behavior entropy weight value and the behavior entropy.

12. The device of claim 7, wherein the network access information comprises age of the user;

the behavior entropy calculation module is further configured to determine whether the age of the user is a sensitive age or not, if yes, then obtain a second behavior entropy weight value corresponding to the sensitive age; and determine a new behavior entropy of the user according to the second behavior entropy weight value and the behavior entropy.

13. A server, comprising:

a processor; and a memory having instructions stored thereon, the instructions, when executed by the processor, cause the processor to perform operations comprising:

obtaining network access information of a user within a preset time period;

extracting a behavior data of the user in each preset behavior class according to the network access information;

calculating a behavior entropy of the user according to the behavior data of the user in each preset behavior class, wherein the behavior entropy characterizes a discrete degree of the network access behavior of the user; and

determining an access class to which the network access behavior of the user belongs according to the behavior entropy.

14. The server of claim 13, wherein extracting the behavior data of the user in each preset behavior class according to the network access information performed by the processor comprises:

preprocessing the network access information; and

obtaining the behavior data of the user in each preset behavior class according to the preprocessed network access information, so that the obtained behavior data of the same class has the same format.

15. The server of claim 13, wherein calculating the behavior entropy of the user according to the behavior data of the user in each preset behavior class performed by the processor comprises:

calculating a statistical number and a total number of each corresponding preset behavior class according to the behavior data of the user in each preset behavior class, wherein the total number being a sum of the statistical number of the each preset behavior class;

calculating a class probability corresponding to the each preset behavior class according to the statistical number and the total number of the each preset behavior class; and

calculating a class entropy corresponding to the each preset behavior class according to the class probability of the each preset behavior class, wherein the class entropy characterizes a discrete degree of the network access behavior of the user in a corresponding class; and
calculating the behavior entropy according to the class entropy of the each preset behavior class.

16. The server of claim 15, wherein a calculation formula of the class entropy is:

$$P_i = a \sum_{i=1}^{C} p_i \log_b (p_i) ,$$ wherein $P_i$ represents a class entropy of class $i$ behavior, $a$

is any coefficient that is not 0, $b$ is a coefficient greater than 0, $C$ represents a class number of a preset behavior class, $p_i$ represents a probability of the class behavior of class $i$ relative to the total number;
the behavior entropy being a sum of the class entropy of the each preset behavior class.

17. The server of claim 13, wherein the network access information comprises a login time of the user within the preset time period;
calculating the behavior entropy of the user according to the behavior data of the user in each preset behavior class performed by the processor comprises:

calculating a discrete degree of the login time of the user;
determining a first behavior entropy weight value of the user according to the discrete degree; and
determining a new behavior entropy of the user according to the first behavior entropy weight value and the behavior entropy.

18. The server of claim 13, wherein the network access information comprises age of the user;
calculating the behavior entropy of the user according to the behavior data of the user in each preset behavior class performed by the processor comprises:

determining whether the age of the user is a sensitive age or not, if yes, then obtaining a second behavior entropy weight value corresponding to the sensitive age; and
determining a new behavior entropy of the user according to the second behavior entropy weight value and the behavior entropy.

19. One or more non-transitory computer readable storage medium storing computer executable instructions that, when executed by the one or more processors, cause the one or more processors to perform the steps of:

obtaining network access information of a user within a preset time period;
extracting a behavior data of the user in each preset behavior class according to the network access information;
calculating a behavior entropy of the user according to the behavior data of the user in each preset behavior class, wherein the behavior entropy characterizes a discrete degree of the network access behavior of the user; and
determining an access class to which the network access behavior of the user belongs according to the behavior entropy.

20. The non-transitory computer readable storage medium of claim 19, wherein extracting the behavior data of the user in each preset behavior class according to the network access information performed by the processor comprises:

preprocessing the network access information; and
obtaining the behavior data of the user in each preset behavior class according to the preprocessed network access information, so that the obtained behavior data of the same class has the same format.

21. The non-transitory computer readable storage medium of claim 19, wherein calculating the behavior entropy of the user according to the behavior data of the user in each preset behavior class performed by the processor comprises:

calculating a statistical number and a total number of each corresponding preset behavior class according to the behavior data of the user in each preset behavior class, wherein the total number being a sum of the statistical number of the each preset behavior class;
calculating a class probability corresponding to the each preset behavior class according to the statistical number and the total number of the each preset behavior class; and

calculating a class entropy corresponding to the each preset behavior class according to the class probability of the each preset behavior class, wherein the class entropy characterizes a discrete degree of the network access behavior of the user in a corresponding class; and

calculating the behavior entropy according to the class entropy of the each preset behavior class.

22. The non-transitory computer readable storage medium of claim 21, wherein a calculation formula of the class entropy is:

$$P_i = a \sum_{i=1}^{C} p_i \log_b(p_i)$$ , wherein $P_i$ represents a class entropy of class $i$ behavior, $a$

is any coefficient that is not 0, $b$ is a coefficient greater than 0, $C$ represents a class number of a preset behavior class, $p_i$ represents a probability of the class behavior of class $i$ relative to the total number;

the behavior entropy being a sum of the class entropy of the each preset behavior class.

23. The non-transitory computer readable storage medium of claim 19, wherein the network access information comprises a login time of the user within the preset time period;

calculating the behavior entropy of the user according to the behavior data of the user in each preset behavior class performed by the processor comprises:

calculating a discrete degree of the login time of the user;

determining a first behavior entropy weight value of the user according to the discrete degree; and

determining a new behavior entropy of the user according to the first behavior entropy weight value and the behavior entropy.

24. The non-transitory computer readable storage medium of claim 19, wherein the network access information comprises age of the user;

calculating the behavior entropy of the user according to the behavior data of the user in each preset behavior class performed by the processor comprises:

determining whether the age of the user is a sensitive age or not, if yes, then obtaining a second behavior entropy weight value corresponding to the sensitive age; and

determining a new behavior entropy of the user according to the second behavior entropy weight value and the behavior entropy.

110

Fig. 1

processor

system bus

operating system

database

computer executable instructions

non-transitory storage medium

network interface

random access memory

server

Fig. 2

S302

obtaining network access information of a user within a preset time period

S304

extracting a behavior data of the user in each preset behavior class according to the network access information

S306

calculating a behavior entropy of the user according to the behavior data of the user in each preset behavior class

S308

determining an access class to which the network access behavior of the user belongs according to the behavior entropy

Fig. 3

S402

calculating a statistical number and a total number of each corresponding preset behavior class according to the behavior data of the user in each preset behavior class

S404

calculating a class probability corresponding to the each preset behavior class according to the statistical number and the total number of the each preset behavior class

S406

calculating a class entropy corresponding to the each preset behavior class according to the class probability of the each preset behavior class

S408

calculating the behavior entropy according to the class entropy of the each preset behavior class

Fig. 4

502

network access
information
obtainment module

505

behavior data
obtainment
module

506

behavior entropy
calculation module

508

access class
determination
module

Fig. 5

602

number
calculation
unit

604

class probability
calculation unit

606

class entropy
calculation
unit

608

behavior
entropy
calculation unit

Fig. 6

# INTERNATIONAL SEARCH REPORT

| International application No. |
|---|
| PCT/CN2017/073615 |

### A. CLASSIFICATION OF SUBJECT MATTER

G06F 17/30 (2006.01) i

According to International Patent Classification (IPC) or to both national classification and IPC

### B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, CNKI, WPI, EPODOC, IEEE: network, information, action, visit, browser, get, entropy, disperse, machine, auto, access, obtain, behavior

### C. DOCUMENTS CONSIDERED TO BE RELEVANT

| Category* | Citation of document, with indication, where appropriate, of the relevant passages | Relevant to claim No. |
|---|---|---|
| PX | CN 105808639 A (PINGAN TECHNOLOGY (SHENZHEN) CO., LTD.) 27 July 2016 (27.07.2016) claims 1-10, and description, pargraphs [0004]-[0092] | 1-24 |
| A | CN 101446979 A (CLAIRNET CO., LTD.) 03 June 2009 (03.06.2009) claim 1 | 1-24 |
| A | CN 101841529 A (BEIJING UNIVERSITY OF TECHNOLOGY) 22 September 2010 (22.09.2010) the whole document | 1-24 |
| A | CN 103793426 A (TECENT TECHNOLOGY (SHENZHEN) CO., LTD.) 14 May 2014 (14.05.2014) the whole document | 1-24 |
| A | US 8495375 B2 (SHERKIN, ALEXANDER) 23 July 2013 (23.07.2013) the whole document | 1-24 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 12 April 2017 | 27 April 2017 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer LI, Dong Telephone No. (86-10) 62414436 |
|---|---|

Form PCT/ISA/210 (second sheet) (July 2009)

**INTERNATIONAL SEARCH REPORT**
Information on patent family members

| | International application No. |
|---|---|
| | PCT/CN2017/073615 |

| Patent Documents referred in the Report | Publication Date | Patent Family | Publication Date |
|---|---|---|---|
| CN 105808639 A | 27 July 2016 | None | |
| CN 101446979 A | 03 June 2009 | None | |
| CN 101841529 A | 22 September 2010 | None | |
| CN 103793426 A | 14 May 2014 | US 2015169601 A1 | 18 June 2015 |
| | | WO 2014067413 A1 | 08 May 2014 |
| US 8495375 B2 | 23 July 2013 | None | |

Form PCT/ISA /210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 2016101003580